# EUROPÄISCHE PATENTSCHRIFT

(11) **EP 2 329 431 B1**
(45) Veröffentlichungstag und Bekanntmachung des Hinweises auf die Patenterteilung: **14.02.2018**
(21) Anmeldenummer: 09782281.1
(22) Anmeldetag: 27.08.2009
(51) Int. Cl.: G06K 19/16, G06K 19/18, G06K 19/08, B42D 15/00, G06K 9/00, G06K 17/00

(54) **IDENTIFIKATIONSMERKMAL**
IDENTIFICATION FEATURE
CARACTÉRISTIQUE D'IDENTIFICATION

(30) Priorität: 29.08.2008 CH 13862008
(43) Veröffentlichungstag der Anmeldung: 08.06.2011
(73) Patentinhaber: U-NICA Technology AG, 7208 Malans (CH)
(72) Erfinder: FRANKEN, Klaus, CH-7206 Igis (CH); RUTZ, Alfred, CH-7014 Trin (CH)
(74) Vertreter: Liebetanz, Michael
(86) Internationale Anmeldenummer: PCT/EP2009/061073
(87) Internationale Veröffentlichungsnummer: WO 2010/023243

(56) Entgegenhaltungen:
- WO-A-96/36010
- US-A- 5 422 744
- US-A- 6 135 355
- US-A1- 2001 005 570
- US-A1- 2002 170 966

## Beschreibung

### Technisches Gebiet

Die vorliegende Erfindung betrifft ein Verfahren zur Identifikation eines Gegenstands, insbesondere zur Authentifizierung oder Nachverfolgung eines Gegenstandes, gemäss dem Oberbegriff des Anspruchs 1 und ein System hierfür.

### Stand der Technik

In den verschiedensten wirtschaftlichen und technischen Bereichen nimmt das Problem der Fälschung von Originalprodukten ständig zu. Neue Technologien erlauben das massenhafte Kopieren der Originale in einer Qualität, so dass sie mit blossem Auge kaum oder gar nicht von Originalen zu unterschieden sind. Betroffen sind nicht nur Luxusartikel, sondern auch Bauteile technischer Einrichtungen, z. B. im Bereich des Automobilbaus, der Medizintechnik oder der Elektronikindustrie, mit zum Teil auch sicherheitsrelevanten Eigenschaften. Um sich gegen diese Art der Produktpiraterie zu schützen, versehen viele Hersteller ihre Produkte mit Identifikationsmerkmalen, um die Echtheit der Produkte überprüfen oder ihren Weg verfolgen zu können. Solche Identifikationsmerkmale werden z. B. in Form von Aufklebern oder Aufdrucken in der Regel nachträglich an einem Produkt oder Bauteil angebracht. Die Aufkleber oder Aufdrucke können z. B. Hologramme oder versteckte Codierungen aufweisen.

Ein Verfahren mit den Merkmalen des Oberbegriffs des Anspruchs 1 und ein System mit den Merkmalen des Oberbegriffs des Anspruchs 7 sind aus der US 6,135,355 bekannt. Es wird ein Gerät mit mindestens zwei auf einer Oberfläche des Geräts ausgebildeten Symbolen gezeigt, wobei das erste Symbol ein Hologramm ist und wobei das zweite Symbol ein ausgestanztes Loch ist. Das Loch kann an einer Auswahl von Positionen im Gerät sein. Der Abstand zwischen dem ersten und der dem zweiten Symbol dient als zusätzliches Identifikationselement und wird auf einem auf dem Gerät angeordneten Datenspeicher abgespeichert.

In der US 2002/170966 wird eine Authentifizierung eines Dokumentes aufgrund des Vergleichs von Informationen eines Wasserzeichens und eines Strichcodes vorgenommen.

Aus der EP1168253 ist zum Beispiel ein Verfahren und ein System zur Authentifizierung bekannt, bei dem Gegenstände oder Dokumente als Identifikationsmerkmal ein Fleckenmuster oder dergleichen aufweisen, das mit elektromagnetischer Strahlung z. B. einer Kamera oder anderen optischen Einrichtungen eines Kommunikationsgeräts abgebildet werden kann. Die von dem Fleckenmuster reflektierte Strahlung wird von dem Kommunikationsgerät detektiert und mit Daten aus einem Datenspeicher verglichen, der die Daten von Informationen zu Fleckenmustern von Originalgegenständen oder -dokumenten speichert. Als optische Einrichtungen werden u.a. auch IR- oder UV-Emitter/Empfänger oder RF-Transmitter/Empfänger verwendet.

In der US 2008/0002882 wird ein Sicherheits- und Authentifizierungsystem beschrieben, bei dem Produkten oder Dokumenten vom Hersteller ein PIN (product identification information) zugeordnet wird. Der PIN stellt einen digitalen Code dar, der durch Verschlüsselung von Identifikationsinformationen durch einen Verschlüsselungsmodus erzeugt wird und als Markierung in Form von Text, Vektorgrafiken oder visuellen Darstellungen an einem Produkt oder Dokument angebracht wird. Die Identifikationsinformationen und der Verschlüsselungsmodus werden in einer PIN Datenbank gespeichert. Die Markierung kann mit einem portablen Gerät, wie etwa einem Mobiltelefon, einem Taschencomputer oder der gleichen, aufgenommen werden. Die Aufnahme der Markierung kann anschliessend durch Telekommunikation via SMS oder MMS, durch Blue-Tooth Einrichtung oder auch über Internetverbindungen an den PIN Datenbankserver übermittelt werden, der den Pin entschlüsselt und die Markierung als Original oder Fälschung identifiziert. Das Ergebnis kann an das portable Gerät übermittelt werden und gibt dem Anwender somit Auskunft über die Echtheit des Produkts oder Dokuments.

Aus der WO 2007/002873 sind Identifikations- und Sicherheitsmerkmale in Form von Labels bekannt, die sich durch die Einzigartigkeit ihrer Oberflächenstruktur auszeichnen. Die Labels werden aus kristallinem Material, zum Teil kombiniert mit nicht-kristallinem Material, oder aus einer Kombination von Polymeren hergestellt, die bei geeigneter Bearbeitung an ihrer Oberfläche einzigartige Muster ausbilden. Die Muster entstehen als Zufallsmuster bei der Herstellung und unterscheiden sich in Grösse und Form der Struktur einzelner Bereiche der Oberfläche (z. B. Kristallstruktur oder Körnigkeit) und bilden somit ein einzigartiges individuelles, nicht reproduzierbares Identifikationsmerkmal. Als Material werden z. B. Metalle, Keramiken, Legierungen oder Polymere verwendet. Die Labels können z. B. durch bestimmte Lösungs- oder Schmelzprozesse hergestellt werden. Anschliessend werden die Labels geschnitten oder gestanzt und auf einem Produkt oder Dokument angebracht. Die Zufallsmuster der Labels werden z. B. mit UV- oder IR-Licht oder mit sichtbarem Licht abgebildet und ihr einzigartiges Muster somit erfasst. Die Messdaten wie Wellenlänge des Lichtes oder der Einfallswinkel bei der Abbildung werden in einer Datenbank gespeichert und nummeriert. Zum Prüfen der Echtheit wird ein Produkt oder Dokument belichtet und die ermittelten Daten werden mittels einer Mustererkennungssoftware mit den vorab gespeicherten Daten verglichen.

In der WO 96/36010 wird ein Gegenstand mit Sicherheitsmerkmal beschrieben, das zwei verschiedene Identifikationselemente umfasst. Ein erstes Identifikationsmerkmal wird durch ein halb transparentes herkömmliches Hologramm vorgesehen. Das Hologramm kann zufallsverteilt über die Oberfläche eines Gegenstands wiederholt werden. Ein zweites Identifikationselement wird durch eine metallische Gitterschicht vorgesehen, die auf der Oberfläche des Gegenstands und auch über dem ersten Identifikationselement angebracht wird, womit die beiden Identifikationselemente somit übereinander angeordnet sind und sowohl das erste als auch das zweite Identifikationselement sind stets sichtbar.

Aus der US 2001/005570 A1 ist ein Verfahren zur Markierung von Gegenständen oder Dokumenten bekannt, bei dem ein Identifikationsmittel und ein Authentifizierungsmittel vorgesehen werden. Als Identifikationsmittel werden z.B. Barcodes, Fotografien oder Zeichen verwendet. Das Authentifizierungsmittel besteht aus einer defraktiven optischen Markierung, wie z.B. einem Hologramm. Das Authentifizierungsmittel ist derart über dem Identifikationsmittel angebracht, dass es nicht möglich ist, dass Authentifizierungsmittel von dem Identifikationsmittel zu trennen, ohne das Letzteres dabei zerstört wird.

Die US 5,422,744 zeigt ein Identifikationsmittel mit einem Barcode, der in einer holographischen Abbildung eingebetet ist. Dabei wird ein Label oder ein Gegenstand, wie beispielsweise eine Kreditkarte, mit einem Barcodesymbol versehen, das holographisch aufgezeichnet wird. Ferner kann ein Hologrammelement mit einem Barcodesymbol in seiner näheren Umgebung vorgesehen werden. Der Barcode wird z.B. direkt auf die Oberfläche eines Polymerfilms, der ein Hologramm bildet, aufgedruckt. Dabei kann der Barcode ebenfalls hologrammartig wahrgenommen werden.

Bei den Verfahren aus dem der Stand der Technik wird an Produkten oder Dokumenten nachträglich ein Identifikationsmerkmal angebracht oder zugeordnet, d. h. die Identifikationsmerkmale müssen zuerst hergestellt oder erstellt werden und können dann zur Markierung dienen (packaging level). Ferner nutzen diese Identifikationsmerkmale in der Regel nur eine Art von Identifikationssystem, wie etwa das Erfassen und Speichern von charakteristischen Eigenschaften eines Labels oder die Vergabe von Sicherheitscodes. Bei den genannten Verfahren muss zur Verifikation eines Produkts oder Dokuments das Identifikationsmerkmal zunächst erfasst und eine Datenverarbeitungseinheit weitergeleitet werden, die nach der Verarbeitung ein Vergleichsergebnis an den Anwender liefert. Die Verfahren sind daher zeitaufwendig und benötigen in der Regel grosse Datenspeicher zur Sicherung der umfangreichen Identifikationsinformationen. Bei einfachen Identifikationsmerkmalen, wie z. B. Hologrammen, kann die Verifikation vor Ort durchgeführt werden. Solche einfache Identifikationsmerkmale können jedoch auch leicht gefälscht werden.

Es ist daher eine Aufgabe der vorliegenden Erfindung ein Identifikationsmerkmal und ein Verfahren zur Identifikation und Authentifizierung von Gegenständen zu schaffen, das die Sicherheit eines mit dem Identifikationsmerkmal versehenen Gegenstands erhöht, das ohne zusätzlichen Aufwand an dem Gegenstand vorgesehen werden kann und das einfach in der Handhabung und Durchführung der Identifikation ist.

### Darstellung der Erfindung

Ein Identifikationsmerkmal zur Identifikation eines Gegenstands gemäss der vorliegenden Erfindung umfasst wenigstens zwei Identifikationselemente. Zumindest ein erstes der Identifikationselemente ist durch wenigstens eine definiert begrenzte Oberfläche mit einer definierten diffraktiven Oberflächenstruktur gegeben, die durch Lichteinstrahlung im visuellen Bereich erkennbar ist. Zumindest ein zweites der Identifikationselemente ist innerhalb eines optischen Erfassungsfeldes, das die definiert begrenzte Oberfläche des ersten Identifikationselements wenigstens teilweise enthält, insbesondere innerhalb der definiert begrenzten Oberfläche des ersten Identifikationselements, vorgesehen. Vorzugsweise umfasst das Erfassungsfeld das gesamte erste Identifikationselement. Das zweite Identifikationselement ist z. B. im näheren Umfeld der definiert begrenzten Oberfläche des ersten Identifikationselements auf der Oberfläche des Gegenstandes vorgesehen, so dass es innerhalb das Erfassungsfeld einer optischen Abbildungseinrichtung fällt, wenn das erste Identifikationselement abgebildet wird. Die Grösse des Erfassungsfeldes kann somit von der verwendeten Abbildungseinrichtung abhängen. Vorzugsweise ist das zweite Identifikationselement aber derart nahe bei dem ersten Identifikationselement angeordnet, dass es in dem Erfassungsfeld unterschiedlicher, herkömmlicher Abbildungseinrichtungen zu liegen kommt.

Nach der Erfindung werden die Identifikationselemente vorzugsweise unmittelbar bei der Herstellung des Gegenstands auf der Oberfläche des Gegenstands erzeugt. Das Identifikationsmerkmal ist somit integraler Bestandteil des Gegenstands und kein zusätzlich und nachträglich angebrachtes Element, wie etwa ein Label oder Aufkleber, auf dem Gegenstand.

Die definiert begrenzte Oberfläche des ersten Identifikationselements kann z. B. durch geometrische Formgebungen auf der Oberfläche, wie etwa Buchstaben, Zahlen oder andere Zeichen, gegeben sein. Die Form, bzw. Umrandung oder die Kanten der Zeichen definieren die Begrenzung der Oberfläche. Die definiert begrenzte Oberfläche kann auch durch eine Absenkung oder Erhebung gegenüber einer Umgebungsoberfläche des Gegenstandes herausgebildet werden.

Die definierte diffraktive Oberflächenstruktur der Oberfläche des ersten Identifikationselements wird vorzugsweise durch eine Struktur nach der Art eines optischen Gitters im Material des Gegenstandes an der Oberfläche ausgebildet. Beispielsweise bildet die Gitterstruktur regelmässige Strukturen im Nanometerbereich aus, wie etwa Vertiefungen oder Erhebungen in der Grössenordnung von 100 - 200 nm. An einer solchen Gitterstruktur kann Licht im visuellen Bereich derart gebeugt werden, dass sich charakteristische Beugungsmuster bilden, die als Identifikationselement dienen können. Als Licht im visuellen Bereich gilt eine elektromagnetische Strahlung im Wellenlängenbereich zwischen ca. 350nm und 800nm. Es ergeben sich für das Auge sichtbare Grau- oder Farbschattierungen, Interferenzeffekte als hologrammartige Gebilde oder holographische Darstellungen. Der charakteristische Farbwechsel auf Grund der Interferenzeffekte erlaubt die einfache Verifikation des Identifikationselements mit dem blossen Auge. Grundsätzlich sind aber auch Strukturen im Mikrometerbereich möglich, die bei geeignetem Lichteinfall mit dem Auge erkennbar sind oder bei der Einstrahlung von elektromagnetischer Strahlung geeigneter Wellenlänge sichtbar sind. Eine erfindungsgemässe definierte diffraktive Oberflächenstruktur kann an planaren, konvexen oder konkaven Oberflächen des Gegenstands vorgesehen werden. Die regelmässige Struktur kann derart ausgestaltet werden, dass sich Bilder oder Schriftzüge erkennen lassen.

Das wenigstens eine zweite Identifikationselement ist innerhalb des optischen Erfassungsfeldes einer Abbildungseinrichtung vorgesehen, so dass es bei der Abbildung des visuell sichtbaren ersten Identifikationselements automatisch mit abgebildet wird. Die Abbildung des zweiten Identifikationselements ist somit auch dann gewährleistet, wenn ein Anwender bei der Abbildung des ersten Identifikationselements nicht weiss wo das zumindest eine zweite Identifikationselement liegt, bzw. gar keine Kenntnis davon hat, dass ein zweites Identifikationselement existiert. Die Position des zweiten Identifikationselements relativ zum ersten Identifikationselement ist gemäss der Erfindung ein charakteristischer Bestandteil des zweiten Identifikationselements. Erfindungsgemäß ist das zweite Identifikationselement nicht sichtbar. Das Identifikationselement kann als Struktur oder Darstellung in einer Grössenordnung sein, die für das menschliche Auge nicht erkennbar ist, oder das Identifikationselement liegt in Form einer digitalen Codierung vor. Demnach kann von einem Betrachter die Position
des zweiten Identifikationselements relativ zum ersten Identifikationselement nicht identifiziert werden.

In einer bevorzugten Ausführungsform ist das zweite Identifikationselement durch eine Zufallsstruktur in einer Oberfläche des zweiten Identifikationselements, bzw. der Oberfläche des Gegenstands gegeben. Derartige Zufallsstrukturen können vorsätzlich durch eine entsprechende Bearbeitung des Materials bei der Herstellung des Gegenstands erzeugt werden. Sie können aber auch zufällig, bzw. unabsichtlich, durch ein Abweichen von einer perfekt regelmässig hergestellten Oberfläche entstehen, wie es auf Grund von Unzulänglichkeiten oder minimalen Abweichungen vom idealen Herstellungsprozess bei der Be- oder Verarbeitung des Material der Fall ist. Besonders bevorzugt ist das zweite Identifikationselement durch eine Zufallsstruktur, bzw. Irregularitäten innerhalb der definierten diffraktiven Oberflächenstruktur des ersten Identifikationselements gegeben. Die Zufallsstruktur kann dabei vorteilhafter Weise durch zufällige Abweichungen von der regelmässigen Oberflächenstruktur des ersten Identifikationselements entstehen. Derartige Zufallsstrukturen sind nicht vorhersehbar und somit nicht reproduzierbar. Sie bilden somit ein einzigartiges charakteristisches Merkmal auf der Oberfläche des Gegenstands, und vorzugsweise auf der definierten Oberfläche des ersten Identifikationselements.

Gemäss der vorliegenden Erfindung ist somit ein Identifikationsmerkmal mit wenigstens zwei Identifikationselementen vorgesehen, die bevorzugt unmittelbar bei der Herstellung des Gegenstands auf der Oberfläche des Gegenstands mit ausgebildet werden (item level). Bei einer Ausführungsform der Erfindung wird das Identifikationsmerkmal bei der Herstellung von Gegenständen im Spritzgussverfahren erzeugt. Dabei wird in der Oberfläche des Spritzgusswerkzeuges eine Negativ-Vorlageform zur Ausbildung der definiert begrenzten Oberfläche des zumindest einen ersten Identifikationselements mit einer definierten diffraktiven Oberflächenstruktur vorgesehen. Die Negativ-Vorlageform definiert dabei die Begrenzung der Oberfläche und das diffraktive Muster, bzw. die diffraktive Oberflächenstruktur des ersten Identifikationselements. Die Negativ-Vorlageform prägt bei der Herstellung des Spritzgussteils die definierte diffraktive Oberflächenstruktur in die Oberfläche des Spritzgussteils und bildet somit zumindest ein erstes Identifikationselement des erfindungsgemässen Identifikationsmerkmals aus.

Im Spritzgussverfahren wird Kunststoff, wie etwa thermoplastische Polymere, Polyolefine, z. B. Polyamid, Polycarbonat, Polyethylen, Polypropylen, etc. oder Gemische daraus, bei hoher Temperatur in fluidem Zustand in die Kavität des Spritzgusswerkzeugs eingespritzt. Anschliessend wird der erhitzte Kunststoff abgekühlt, bzw. abgeschreckt, wobei der Kunststoff entsprechend der Form der Kavität erstarrt. Beim Erstarren des Kunststoffs können sich molekulare Einheiten zueinander ausrichten (z. B. im Fall kristalliner Polymere) oder es bilden sich zufällige amorphe Strukturen (z. B. im Fall amorpher Polymere). Da in der Praxis eine ideale Aushärtung ohne Unregelmässigkeiten oder Fehler in der Oberfläche des Spritzgussformings nicht möglich ist, bilden sich u. a. entlang der Oberfläche Gitterfehler, Unregelmässigkeiten, Bereiche unterschiedlicher Orientierung oder Körnigkeit etc. gemäss einem Zufallsprinzip aus und bilden Zufallsstrukturen. Es ist möglich dem Kunststoff Additive bei zu mischen, welche die Ausbildung von Zufallsstrukturen fördern oder überhaupt erst ermöglichen. Als Additive können z. B. Kristallisationskeime, Pigmente, Farbstoff, oder der Gleichen verwendet werden. Diese Zufallsstrukturen sowie die zufällig arrangierten amorphen Bereiche dienen gemäss der Erfindung als zweites Identifikationselement. Da derartige Zufallsstrukturen auch im Bereich der Negativ-Vorlageform der Kavität entstehen, bilden sich in diesem Bereich gleichzeitig die definierten diffraktiven Oberflächenstruktur des ersten Identifikationselements und die Zufallsstrukturen des zweiten Identifikationselements aus.

Grundsätzlich ist die Ausbildung eines zweiten Identifikationselements innerhalb der Oberflächenstruktur eines ersten Identifikationselements gemäss der Erfindung nicht auf Kunststoffe beschränkt. Derartige Identifikationselemente können auch bei der Herstellung von Bauteilen aus Metallen, Legierungen oder Keramiken erzeugt werden. Bei Metallen eignen sich hierfür u. a. Weissblech, Aluminium oder Titan.

Die vorliegende Erfindung macht bei einem Identifikationsmerkmal mit wenigstens zwei Identifikationselementen zu nutze, dass ein erstes Identifikationselement auf einem ersten Erkennungsniveau (first Level) und ein zweites Identifikationselement erst auf einem zweiten Erkennungsniveau (second Level, third Level) identifiziert werden kann. An Hand des ersten Identifikationselements kann aber das zweite Identifikationselement leichter geortet, bzw. lokalisiert werden. Das zweite Identifikationselement kann daher weniger aufwendig ausgebildet werden. Es können z. B. kleinere Bereiche oder einfachere Codierungen zur Identifikation ausgewählt werden. Bevorzugt sind die Identifikationsinformationen des zweiten Identifikationselements durch die Eigenschaften des ersten Identifikationselements gegeben oder werden durch diese begründet. Besonders bevorzugt werden die zufällig ausgeprägten Eigenschaften des ersten Identifikationselements als Identifikationsinformationen für das zweite Identifikationselement verwendet.

Bei einem Verfahren zur Identifikation eines Gegenstands mit einem Identifikationsmerkmal, das zumindest ein erstes und zumindest ein zweites Identifikationselement aufweist, wie es oben beschrieben wurde, wird nach der Herstellung des Gegenstands, bzw. des Anbringens des Identifikationsmerkmals am Gegenstand, die Position des zumindest einen zweiten Identifikationselements relativ zum zumindest einen ersten Identifikationselements bestimmt. Die Bestimmung der Position kann z. B. durch optische Abbildung des ersten Identifikationselements erfolgen. Dabei ist es möglich zunächst das erste Identifikationselement abzubilden und an Hand der Abbildung einen Bereich innerhalb oder zumindest im näheren Umfeld des ersten Identifikationselements zu wählen, dessen Struktur sich als zweites Identifikationselement eignet, und die Position dieses Bereichs als Position des zweiten Identifikationselements zu bestimmen. Dabei ist darauf zu achten, dass ein Bereich gewählt wird, der innerhalb des Erfassungsfeldes einer Abbildungseinrichtung liegt. Es ist natürlich auch möglich zwei oder mehr Bereiche zu wählen. Anstelle der Nutzung der Oberflächenstruktur eines Gegenstands als zweites Identifikationselement kann auch einem Bereich des ersten Identifikationselements eine Codierung als zweites Identifikationselement beigefügt werden. Anhand der optischen Abbildung des ersten Identifikationselements kann dann bestimmt werden, welchem Bereich, bzw. welcher Position des ersten Identifikationselements, der Code entnommen werden kann.

Die charakteristische und einzigartige Abbildung der Oberflächenstruktur, vorzugsweise in Form einer Zufallsstruktur, wird als Identifikationsinformation für das zweite Identifikationselement festgelegt, welche das Identifikationselement und damit den Gegenstand eindeutig bestimmt. Alternativ kann die hinterlegte Codierung als Identifikationsinformation für das zweite Identifikationselement festgelegt werden.

Die bestimmte Position und die Identifikationsinformation für das wenigstens eine zweite Identifikationselement werden registriert und in einem Datenspeicher, bzw. einer Datenbank, abgelegt. Die Daten aller Gegenstände, welche mit dem erfindungsgemässen Verfahren identifiziert, bzw. verifiziert werden sollen, können in einer einzigen oder unterteilt in verschiedenen Datenbanken gespeichert werden.

Zur Identifikation eines Gegenstands wird dieser zunächst an Hand des wenigstens einen ersten Identifikationselements bewertet. Möglicherweise lässt sich bereits an dem ersten Identifikationselement feststellen, dass es sich um eine Fälschung handelt und die Überprüfung ist abgeschlossen. Da das erste Identifikationselement mittels Lichteinstrahlung im visuellen optischen Bereich geprüft werden kann, kann diese Prüfung in einfacher Weise ohne weitere Hilfsmittel vor Ort erfolgen. Bestehen Zweifel an der Echtheit des Gegenstandes kann das wenigstens eine zweite Identifikationselement zur weiteren Prüfung herangezogen werden. Hierfür wird die definiert begrenzte Oberfläche des ersten Identifikationselements mittels eines optischen Abbildungsgeräts abgebildet. Grundsätzlich können alle bekannten Abbildungsgeräte verwendet werden, wie etwa Scanner, Kameras, Laser-Reflexionsgeräte, CCD-Kameras etc., die mit kohärenter elektromagnetischer Strahlung arbeiten.

Vorzugsweise sind die wenigstens einen zweiten Identifikationselemente derart ausgebildet, dass sie durch Abbildungseinrichtungen abgebildet werden können, die in aus dem Stand der Technik bekannte tragbare Kommunikationsgeräte integriert sind. Solche tragbare Kommunikationsgeräte sind z. B. Mobiltelefone, Taschencomputer, PDA-Geräte (personal digital assistant), etc. Hierfür werden vorzugsweise Oberflächenstrukturen als Identifikationselemente in einer Grössenordnung von Mili- oder Micrometern verwendet. Ferner können die Identifikationselemente durch folgende Charakteristika definiert sein und somit eine eindeutige und einzigartige Identifikationsinformation tragen: Kristallstruktur, Körnigkeit, Schattierung, Kristallinität, Photolumineszenz, Fluoreszenz, Brechungsindizes, Oberflächenenergie, Oberflächenspannung oder hydrophobe/hydrophile Eigenschaften. Bekannte tragbare Kommunikationsgeräte sind in der Lage Licht im UV-, IR- und sichtbaren Bereich zur Abbildung des Identifikationselements zu verwenden und die Abbildung zu registrieren. Bei der Auswahl einer Position, bzw. eines zweiten Identifikationselements, muss auf die Auflösungseigenschaften des verwendeten Abbildungsgeräts geachtet werden. Einfache mobile Geräte weisen im Allgemeinen eine Auflösung im VGA- oder MCGA-Bereich aufweisen. Es sind inzwischen aber auch mobile Telekommunikationsgeräte mit einer Auflösung bis zum QXGA-, bzw. QWXGA-Bereich, bzw. im Megapixel-Bereich auf dem Markt erhältlich. Ferner ist es mögliche die Struktur eines zweiten Identifikationselements durch Videoaufzeichnungstechnik abzubilden. Hierfür kann z. B. eine Auflösung im PAL-Bereich von mobilen Geräten realisiert werden. Bei der Verwendung von Geräten mit Auflösungen im UHDV-Bereich können entsprechend feinere Strukturen als zweites Identifikationselement gewählt werden.

Gemäss der Erfindung wird an Hand der Abbildung die Position des wenigstens einen zweiten Identifikationselements extrahiert und die Identifikationsinformation des zweiten Identifikationselements an dieser Position wird erfasst. Die erfasste Identifikationsinformation wird mit den Positionen und Identifikationsinformationen aus dem Datenspeicher, bzw. der Datenbank verglichen, beispielsweise mittels einer Mustererkennungssoftware oder mittels eines Decoders. Kann die von einem Gegenstand abgelesene Identifikationsinformation in den Daten des Speichers identifiziert werden, liegt ein registrierter Originalgegenstand vor. Anderen Falls handelt es sich um eine Fälschung. Das Ergebnis aus dem Vergleich der Abbildung mit den gespeicherten Identifikationsinformationen wird dem Anwender in geeigneter Form übermittelt.

In einer bevorzugten Ausführungsform weist das tragbare Kommunikationsgerät eine Telekommunikationseinrichtung auf mit der die abgebildeten Daten via Telekommunikation an einen externen Server, bzw. die Datenbank, in welcher die Identifikationsinformationen zu den Gegenständen gespeichert sind, übertragen werden können. Ein Anwender, wie etwa ein Käufer eines Luxusgegenstands oder eines technisch hochwertigen Gegenstands, kann dann vor Ort beim Erwerb des Gegenstands in einfacher Weise die Echtheit des Gegenstands verifizieren oder einen bestimmten Gegenstand identifizieren. Er kann zunächst das wenigstens eine erste Identifikationselement überprüfen und zudem z. B. mit seinem Mobiltelefon, in dem eine Kamera integriert ist, ein Abbild des ersten Identifikationselements erstellen. Er kann ohne Weiteres an Hand des ersten Identifikationselements die Stelle identifizieren, die für die Überprüfung abzubilden ist. Das Abbild kann mittels Mobilfunknetzen, wie GSM- oder UMTS-Netzen, z. B. als MMS-Nachricht an einen Datenverarbeitungsserver gesendet werden, der die Identifikationsinformation mit den gesammelten Daten in der Datenbank vergleicht. Das Vergleichsergebnis kann umgehend via dem Mobilfunknetz an den Anwender zurück gesendet werden.

Bei einer anderen Anwendung des erfindungsgemässen Verfahrens kann die Abbildung z. B. auch mit einer Kamera eines Taschencomputers erzeugt werden, der das Abbild z. B. mittels einer WLAN-Verbindung via Internet an einen Server sendet. Natürlich sind auch andere Telekommunikationswege und auch herkömmliche Kabelübertragungen denkbar.

Alternativ können die Identifikationsinformationen für einen Vergleich gemäss dem erfindungsgemässen Verfahren auch in dem tragbaren Kommunikationsgerät gespeichert sein. Mit einer Mustererkennungs- oder Decodierungssoftware kann ein Vergleich der Identifikationsinformation einer Abbildung direkt in dem tragbaren Telekommunikationsgerät durchgeführt werden und das Ergebnis an einer Anzeige des Geräts angezeigt werden. Die Daten können z. B. mittels Internet von dem Datenserver in das tragbare Telekommunikationsgerät heruntergeladen werden.

Es ist ein Vorteil der vorliegenden Erfindung, dass durch die Erkennung oder Identifizierung des wenigstens einen ersten Identifikationselements bereits eine Vorprüfung eines Gegenstandes stattfinden kann. Die erste Überprüfung erfolgt gewisser Massen an einer Grobstruktur des Identifikationsmerkmals. Um die Sicherheit der Verifizierung zu erhöhen, kann zudem das wenigstens eine zweite Identifikationselement herangezogen werden. Da aufgrund der bekannten Position des zweiten Identifikationselements relativ zum ersten Identifikationselement der Bereich bereits sehr eingeschränkt ist, der für die Begutachtung des zweiten Identifikationselements betrachtet werden muss, verringert sich die erforderliche Datenmenge und ein Vergleich mit gespeicherten Daten und den bei der Überprüfung ermittelten Daten kann schneller und sicherer erfolgen. Es ist eine eindeutige Erkennung eines Gegenstands möglich. Ferner kann eine zuverlässige und sichere Rückverfolgung durchgeführt werden, wie sie z. B. bei Track and Trace Verfahren verwendet werden.

Bei einer weiteren Ausführungsform der vorliegenden Erfindung ist es auch möglich Identifikationsinformationen bzgl. des wenigstens einen ersten Identifikationselements in der Datenbank abzulegen. Vorzugsweise werden hierfür Identifikationsinformationen aus einem Bereich des ersten Identifikationselements verwendet, der nahe bei der Position des zweiten Identifikationselements ist, oder bevorzugter Weise an der selben Position wie das zweite Identifikationselement ist. Die Identifikationsinformation kann z. B. aus einem Farbcode oder aus Angaben über die Oberflächenstruktur bestehen. Die Identifikationsinformation des ersten Identifikationselements kann gleichzeitig mit der Überprüfung der Identifikationsinformationen des ersten Identifikationselements durch die Abbildung des ersten Identifikationselements verifiziert werden.

### Kurze Beschreibung der Zeichnungen

Bevorzugte Ausführungsformen der Erfindung werden im Folgenden anhand der Zeichnung beschrieben. Aus den Figuren ersichtliche Merkmale der Erfindung sollen als zur Offenbarung gehörend verstanden werden. Die Figuren sollen in keiner Weise als Einschränkung aufgefasst werden. In der Zeichnung stellen dar:
- Fig. 1:: eine erste Ausführungsform der vorliegenden Erfindung an einem Teil eines elektrischen Bauteils;
- Fig. 2:: eine mikroskopische Darstellung eines Identifikationselements gemäss der vorliegenden Erfindung;
- Fig. 3:: eine mikroskopische Darstellung eines weiteren Identifikationselements gemäss der vorliegenden Erfindung und
- Fig. 4:: ein Ablaufdiagram für den Ablauf eines Verfahrens gemäss der vorliegenden Erfindung.

### Ausführliche Beschreibung bevorzugter Ausführungsformen

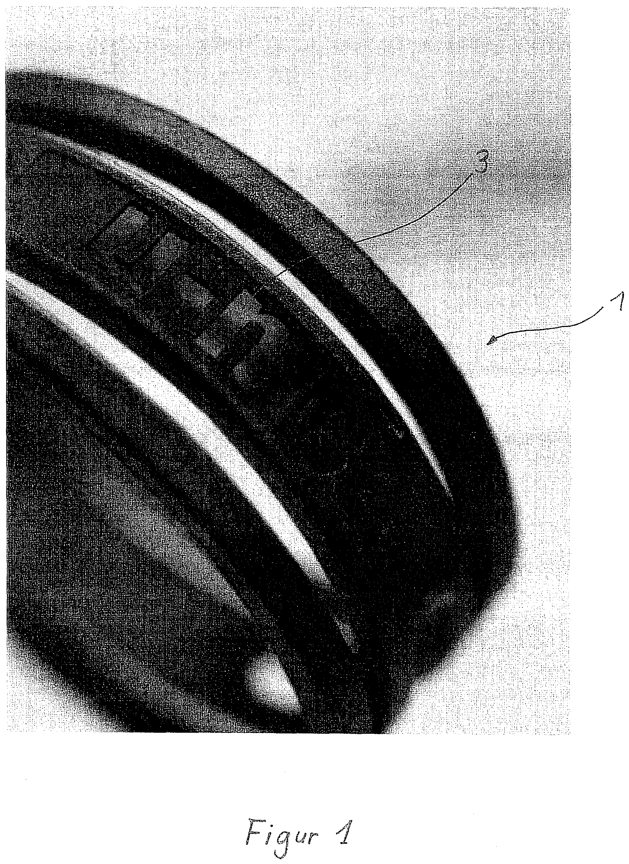

In Figur 1 ist ein Teil eines elektrischen Bauteils 1 mit einem Identifikationsmerkmal gemäss der vorliegenden Erfindung in Form eines federnden Ringes gezeigt. Das Bauteil 1 wurde im Spritzgussverfahren hergestellt und ist im Wesentlichen ringförmig mit einer gebogenen, bzw. konvexen, Oberfläche ausgebildet. Es weist auf seiner Umfangsfläche einen in die Oberfläche integrierten Schriftzug "u-nica" auf. Der Schriftzug erstreckt sich in gebogener Weise über die Umfangsfläche des Bauteils 1. Die Oberflächen der Buchstaben des Schriftzugs bilden jeweils ein erstes Identifikationselements 3 gemäss der Erfindung. Der Rand der einzelnen Buchstaben definiert die Begrenzung der Oberfläche eines ersten Identifikationselements 3. Die Oberfläche der Buchstaben ist als definierte diffraktive Oberflächenstruktur ausgebildet. Bei der Einstrahlung von Tageslicht oder z. B. künstlichem Licht, wie es zur Raumbeleuchtung verwendet wird, schillert die definiert diffraktive Oberflächenstruktur in einzigartiger Weise in für das Bauteil 1 unverwechselbaren Farben auf Grund von Interferenzeffekten. Anhand des Farbeffekts kann eine erste Überprüfung des Bauteils 1 auf seine Echtheit erfolgen. Ein zweites Identifikationselement des Identifikationsmerkmals ist, wie gemäss der Erfindung bevorzugt, nicht sichtbar an dem Bauteil 1 vorgesehen.

Bei einem derartigen Bauteil können auch mehrere Bauteile, die z. B. zu einer Produktionsreihe gehören, ein Identifikationsmerkmal mit einem gleichen ersten Identifikationselement tragen. Wie im vorliegenden Beispiel kann das erste Identifikationselement durch den hologrammartig schillernden Schriftzug "u-nica" gegeben sein. An Hand des ersten Identifikationselements können die einzelnen Bauteile als zu der Produktionsreihe gehörend identifiziert und z. B. vorsortiert werden und anschliessend einer weiteren Prüfung unterzogen werden.

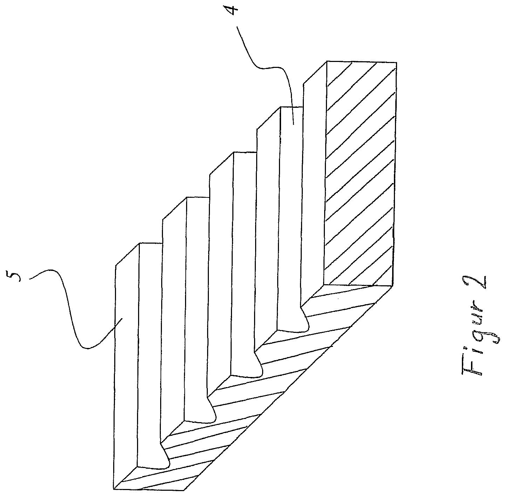

In Figur 2 ist eine mikroskopische Aufnahme der definierten diffraktiven Oberflächenstruktur 4 des ersten Identifikationselements 3 des Bauteils 1 gezeigt. Das Bauteil 1 ist in diesem Fall durch ein Spritzgussverfahren hergestellt, bei welchem in der Kavität der Spritzgussanlage eine Negativ-Vorlagenform zur Ausgestaltung der Oberflächenstruktur des Bauteils 1 vorgesehen sind. Die Oberflächenstruktur weist geradlinig parallel verlaufende Erhebungen 5 in definiertem Abstand zueinander auf. Die Erhebungen 5 weisen zu beiden Seiten einen definierten Steigungswinkel auf. Durch die Erhebungen 5 auf der Oberfläche bildet sich ein Beugungsgitter aus. Wird elektromagnetische Strahlung auf das Gitter gelenkt entsteht ein Interferenzeffekt, der visuell wahrnehmbar ist und als erstes Identifikationselement dient.

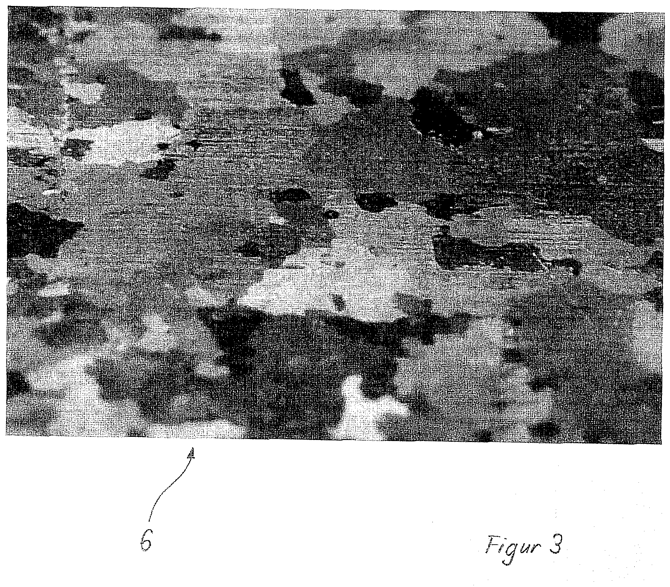

In Figur 3 ist eine Mikroskopaufnahme der Oberfläche aus dem Umfeld der Buchstaben des Schriftzuges gezeigt. Bei dieser Ausführungsform des Bauteils 1 hat sich im Material des Bauteils 1 auf der Oberfläche des Bauteils 1 um den Schriftzug herum eine Zufallsstruktur 6 ausgebildet. Die Zufallsstruktur ist durch diverse helle und dunkle Bereiche gekennzeichnet, die sich bei der Herstellung des Bauteils 1 in zufälliger Weise auf der Oberfläche ausbilden, wie oben beschrieben wurde. Das Material bildet durch das schnelle Erkalten nach dem Einspritzen in die Kavität der Spritzgussanlage derartige Zufallsstrukturen aus. Das Muster der Zufallsstruktur ist einzigartig und kann zur Identifizierung des Bauteils 1 verwendet werden. Die Zufallsstruktur bildet ein zweites Identifikationselement des Identifikationsmerkmals gemäss der Erfindung. Wird das Zufallsmuster mit einem Abbildungsgerät abgebildet, kann ein Bereich, der sich aufgrund seiner Struktur besonders zur Unterscheidung von anderen Bereichen eignet, ausgewählt werden. Z. B. können in einem ausgewählten Bereich die einzelnen Gebiete besonders kontraststark ausgebildet sein. Dieser Bereich wird als zweites Identifikationselement ausgewählt und die zugehörige Position relativ zum ersten Identifikationselement gespeichert. Da bei dieser Methode nicht die gesamten Daten des Abbilds gespeichert werden, sondern nur ein ausgewählter Bereich, reduziert sich die zu speichernde Datenmenge.

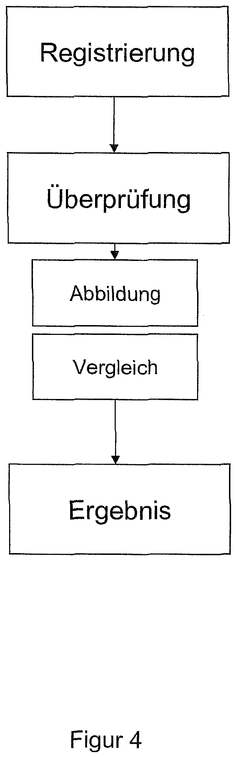

Figur 4 zeigt schematisch den Ablauf der einzelnen Schritte zur Bereitstellung und Durchführung eines Identifikations- und Authentifizierungsverfahrens gemäss der vorliegenden Erfindung.

Registrierung: Nach der Herstellung eines Gegenstands mit einem Identifikationsmerkmal, der mit dem erfindungsgemässen Verfahren verifiziert oder zurück verfolgt werden soll, wird der Gegenstand registriert. Hierfür wird ein erstes Identifikationselement mit einer definierten begrenzten Oberfläche festgelegt, dass als eine Art Referenz für ein zweites Identifikationselement dient. Es wird ein Bereich innerhalb oder nahe bei der definierten begrenzten Oberfläche festgesetzt, beispielsweise durch geometrische Merkmale oder auch durch Aufnahme des Gegenstands mit einem optischen Abbildungsgerät, so dass an der die Position eines zweiten Identifikationselements relativ zum erste Identifikationselement bestimmt werden kann. Das zweite Identifikationselement ist erfindungsgemäß nicht sichtbar. Aus der Abbildung des Identifikationselements werden die einzigartigen charakteristischen Merkmale des zweiten Identifikationselements entnommen und können somit erfasst werden. Alternativ wird an der Position des ersten Identifikationselements ein digitaler Code hinterlegt, der als zweites Identifikationselement dient. Die charakteristischen Merkmale des zweiten Identifikationselements und die Position des zweiten Identifikationselements relativ zum ersten Identifikationselement werden als eindeutige Identifikationsinformation in einer Datenbank abgelegt. Optional können auch die charakteristischen Daten des ersten Identifikationselements in der Datenbank registriert werden. Eine derartige Registrierung kann vollautomatisch erfolgen und ist daher nicht sehr kosten- und zeitaufwendig.

Überprüfung: Nachdem der Gegenstand registriert wurde, kann er in Umlauf gebracht werden. Um den Weg des Gegenstands zu verfolgen oder um seine Echtheit zu prüfen, kann ein Anwender des erfindungsgemässen Verfahrens, mit einem Abbildungsgerät eine Abbildung des Gegenstands aufnehmen. Als Abbildungsgerät wird vorzugsweise ein tragbares Telekommunikationsgerät, besonders bevorzugt ein Mobiltelefon mit eingebauter Kamera verwendet. Der Anwender nimmt an der Stelle des Gegenstands, an der das visuell sichtbare erste Identifikationselement vorgesehen ist, ein Abbild des ersten Identifikationselements. Anschliessend sendet er das Abbild z. B. als MMS-Nachricht mittels einer Mobilfunkverbindung an den Datenbankserver, bzw. einen Prozessor, der mit der Datenbank kommuniziert. Durch eine Software wird an Hand der Identifikationsinformationen aus der Datenbank die Position des zweiten Identifikationselements auf den Gegenstand und die zugehörige Identifikationsinformation an dieser Position auf das zweite Identifikationselement gefunden und mit den Informationen aus dem aktuellen Abbild des Gegenstandes verglichen. Dabei reicht es aus nur die Informationsdaten an der Position des zweiten Identifikationselements zu verifizieren. Weitere Daten zu anderen Bereichen oder Charakteristika des zweiten Identifikationselements, die ebenfalls in dem Abbild enthalten sind, müssen nicht überprüft werden.

Ergebnis: Stimmen die mit dem Abbild erfassten Daten mit einem Datensatz einer Identifikationsinformation in der Datenbank überein, wird an den Anwender eine Mitteilung z. B. in Form einer SMS-Nachricht mit einem positiven Ergebnis übermittelt. Stimmen jedoch die Daten der Abbildung mit keinerlei Identifikationsinformationen überein, wurde der Gegenstand nicht registriert und ist somit eine Fälschung, bzw. nicht der gesuchte Gegenstand. Dem Anwender wird in diesem Fall ein negatives Ergebnis übermittelt.

Wie bereits eingangs beschrieben können auch andere Arten von tragbaren Kommunikationsgeräten im Sinne der Erfindung eingesetzt werden. Ebenso gibt es verschiedene Übermittlungsmöglichkeiten sowohl für den Austausch der Identifikationsinformationen als auch für die Übermittlung eines Ergebnisses aus der Verifikation. Die Erfindung wurde beispielhaft an Hand einer Vorgehensweise und einem Identifikationsmerkmal an einem Gegenstand beschrieben. Natürlich bestehen Abwandlungen hierzu, die in analoger Weise die gleiche Funktion, wie bei der vorliegenden Erfindung erfüllen und von der Erfindungsidee umfasst sind.

### Bezugszeichenliste

- 1: Bauteil
- 3: Identifikationselement
- 4: Oberfläche
- 5: Erhebung
- 6: Oberflächenmuster

## Patentansprüche

1. Verfahren zur Identifikation eines Gegenstands (1) mit einem Identifikationsmerkmal, das wenigstens ein erstes Identifikationselement (3) und das wenigstens ein zweites Identifikationselement (6) aufweist, wobei das oder die ersten Identifikationselemente (3) und das oder die zweiten Identifikationselemente (6) integraler Bestandteil des Gegenstands (1) sind, wobei das zumindest eine erste (3) Identifikationselement durch wenigstens eine definiert begrenzte Oberfläche mit einer definierten diffraktiven Oberflächenstruktur gegeben ist, die durch Lichteinstrahlung im visuellen Bereich erkennbar ist, und wobei das zumindest eine zweite Identifikationselement (6) innerhalb eines vorbestimmten Feldes vorgesehen ist, wobei das vorbestimmte Feld die wenigstens eine definiert begrenzte Oberfläche des ersten Identifikationselements (3) wenigstens teilweise erfasst,
wobei das Verfahren den Schritt umfasst:
Registrierung und Speicherung der Position, an der das wenigstens eine zweite Identifikationselement (6) relativ zu dem wenigstens einen ersten Identifikationselement (3) angeordnet ist, in einer Datenbank, **dadurch gekennzeichnet, dass** das Verfahren folgende weitere Schritte umfasst:
Registrierung und Speicherung von Identifikationsinformationen, die für das wenigstens eine zweite Identifikationselement (6) einzigartig sind, in der Datenbank,
Abbildung mittels eines Abbildungsgeräts der wenigstens einen definiert begrenzten Oberfläche des wenigstens einen ersten Identifikationselements (3),
Extraktion der Position des wenigstens einen zweiten Identifikationselements (6) aus den in der Datenbank gespeicherten Daten der Positionen des wenigstens einen zweiten Identifikationselements (6),
Erfassung der Informationen zu dem wenigstens einen zweiten Identifikationselement (6) an der Position des wenigstens einen zweiten Identifikationselements (6), wobei die Position des wenigstens einen zweiten Identifikationselements (6) für das menschliche Auge nicht sichtbar und mit Hilfe der in der Datenbank gespeicherten Position ermittelbar ist, Vergleich der Informationen zu dem wenigstens einen zweiten Identifikationselement (6) mit den in der Datenbank gespeicherten Identifikationsinformationen, und
Angabe des Ergebnisses aus dem Vergleich der gespeicherten und der abgebildeten Identifikationsinformationen.

2. Verfahren nach Anspruch 1, wobei Identifikationsinformationen des zumindest einen ersten Identifikationselements (3) gespeichert werden.

3. Verfahren nach einem der Ansprüche 1 oder 2, wobei die Positionen und Identifikationsinformationen in einer externen Datenbank gespeichert werden.

4. Verfahren nach einem der Ansprüche 1 bis 3, wobei als Abbildungsgerät ein tragbares Kommunikationsgerät mit einer Abbildungseinrichtung verwendet wird.

5. Verfahren nach Anspruch 3 und nach Anspruch 4, wobei die Daten aus der Abbildung mittels Telekommunikation durch das tragbare Kommunikationsgerät an die externe Datenbank übermittelt werden.

6. Verfahren nach einem der Ansprüche 4 oder 5, wobei das Ergebnis aus dem Vergleich an das tragbare Kommunikationsgerät übermittelt wird.

7. System bestehend aus einem Gegenstand (1) mit einem Identifikationsmerkmal zu seiner Identifikation, wobei das Identifikationsmerkmal wenigstens ein erstes (3) und wenigstens ein zweites Identifikationselement (6) umfasst, wobei das zumindest eine erste (3) Identifikationselement durch wenigstens eine definiert begrenzte Oberfläche mit einer definierten diffraktiven Oberflächenstruktur (4) gegeben ist, die durch Lichteinstrahlung im visuellen Bereich erkennbar ist, und wobei das zumindest eine zweite (6) Identifikationselement innerhalb eines vorbestimmten Feldes vorgesehen ist, das die wenigstens eine definiert begrenzte Oberfläche des wenigstens einen ersten Identifikationselements (3) wenigstens teilweise erfasst, wobei das zumindest eine erste und das zumindest eine zweite Identifikationselement (6) integraler Bestandteil des Gegenstands (1) sind, und einer Datenbank, in welcher Information bezüglich der Position, an der das wenigstens eine zweite Identifikationselement (6) relativ zu dem wenigstens einen ersten Identifikationselement (3) angeordnet ist, gespeichert ist, **dadurch gekennzeichnet, dass** Identifikationsinformation, die für das wenigstens eine zweite Identifikationselement (6) einzigartig ist, in der Datenbank gespeichert ist, wobei die Position des wenigstens einen zweiten Identifikationselements (6) für das menschliche Auge nicht sichtbar und mit Hilfe der in der Datenbank gespeicherten Position ermittelbar ist.

8. System nach Anspruch 7, wobei das zumindest eine zweite Identifikationselement (6) durch eine Zufallsstruktur in einer Oberfläche des zumindest einen zweiten Identifikationselements (6) oder des Gegenstands (1) gegeben ist.

9. System nach Anspruch 8, wobei die Zufallsstruktur des zumindest einen zweiten Identifikationselements (6) in der definierten diffraktiven Oberflächenstruktur (4) des zumindest einen ersten Identifikationselements (3) integriert ist.

10. System nach Anspruch 9, wobei die definierte diffraktive Oberflächenstruktur (4) und die Zufallsstruktur an einer Kunststoffoberfläche ausgebildet sind.

11. System nach Anspruch 10, wobei die Kunststoffoberfläche durch amorphe oder kristalline Polymere oder eine Polymermischung gebildet ist.

12. System nach einem der Ansprüche 9 oder 10, wobei die definierte diffraktive Oberflächenstruktur (4) und die Zufallsstruktur an einer Metalloberfläche ausgebildet sind.

13. System nach einem der vorhergehenden Ansprüche 7 bis 12, wobei das zumindest eine zweite Identifikationselement (6) nicht sichtbar ist.

14. System nach einem der vorhergehenden Ansprüche 7 bis 13, wobei die definierte diffraktive Oberflächenstruktur (4) einen hologrammartigen Interferenzeffekt oder ein Hologramm erzeugt.

15. System nach einem der vorhergehenden Ansprüche 7 bis 14, wobei das vorbestimmte Feld des zumindest einen zweiten Identifikationselements (6) ein optisches Erfassungsfeld ist.

## Claims

1. A method for identifying an article (1) with an identification feature which has at least one first identification element (3) and a second identification element (6), wherein the one or more first identification elements (3) and the one or more second identification elements (6) are an integral part of the article (1), wherein the at least one first identification element (3) is provided by at least one definedly bounded surface with a defined diffractive surface structure, which can be recognized by virtue of incident light in the visual range, and wherein the at least second identification element (6) is provided within an optical coverage field which optical coverage field at least partially contains the definedly bounded surface of the first identification element (3), wherein the method comprises the step of: registration and storage of the position at which the at least one second identification element (6) is arranged relative to the at least one first identification element (3) in a database, **characterized in that** the method comprises the following further steps: registration and storage of identification information which is unique to the at least one second identification element (6) in the database, imaging of the at least one definedly bounded surface of the at least one first identification element (6) using a imaging appliance, extraction of the position of the at least one second identification element (6) from the stored data in the database of the positions of the at least one second identification element (6), capture of the information relating to the at least one second identification element (6) at the position of the at least one second identification element (6), wherein the position of the at least one second identification element (6) cannot be recognized by the human eye and is ascertainable with the help of the position stored in the database, comparison of information relating to the at least one second identification element (6) with the identification information stored in the database, and indication of the result of the comparison of the stored and imaged identification information.

2. The method as claimed in claim 1, wherein identification information from the first identification element (3) is stored.

3. The method as claimed in one of claims 1 or 2, wherein the positions and identification information are stored in an external database.

4. The method as claimed in any one of claims 1 to 3, wherein a portable communication appliance with an imaging device is used as the imaging appliance.

5. The method as claimed in claim 3 and in claim 4, wherein the data from the imaging are transmitted to the external database by means of telecommunication by the portable communication appliance.

6. The method as claimed in one of claims 4 or 5, wherein the result of the comparison is transmitted to the portable communication appliance.

7. A system consisting of an article (1) with an identification feature for its identification, wherein the identification feature comprises at least a first identification element (3) and at least a second identification element (6), wherein the at least one first identification (3) elements is provided by at least one definedly bounded surface with a defined diffractive surface structure which can be recognized by virtue of incident light in a visual range, and wherein the at least one second identification element (6) is provided within a predetermined field, which at least partially covers the at least one definedly bounded surface of the at least one first identification element (3), wherein the at least one first identification element (3) and the at least one second identification element (6) are an integral part of the article (1), and a database, in which is stored information relating to the position, at which is provided the at least one second identification element (6) relating to the at least one first identification element (3), **characterized in that** identification information which is unique to the at least one second identification element (6) is stored in the database, wherein the position of the at least one second identification element (6) cannot be recognized by the human eye and is ascertainable with the help of the position stored in the database.

8. The system as claimed in claim 7, wherein the at least one second identification element (6) is provided by a random structure in a surface of the at least one second identification element (6) or the article (1).

9. The system as claimed in claim 8, wherein the random structure of the at least one second identification element (6) is integrated in the defined diffractive surface structure (4) of the at least one first identification element (3).

10. The system as claimed in claim 9, wherein the defined diffractive surface structure (4) and the random structure are produced on a plastic surface.

11. The system as claimed in claim 10, wherein the plastic surface is formed by amorphous or crystalline polymers or a polymer mixture.

12. The system as claimed in claim 9 or 10, wherein the defined diffractive surface structure (4) and the random structure are produced on a metal surface.

13. The system as claimed in any one of claims 7 to 12, wherein the at least one second identification element (6) is not visible.

14. The system as claimed in any one of claims 7 to 13, wherein the defined diffractive surface structure (4) produces a hologram-like interference effect or a hologram.

15. The system as claimed in any one of claims 7 to 14, wherein the predetermined field of the at least one second identification element (6) is an optical coverage field.

## Revendications

1. Procédé d'identification d'un objet (1) avec une caractéristique d'identification qui comporte au moins un premier élément d'identification (3) et au moins un deuxième élément d'identification (6), où l'au moins un premier élément d'identification (3) et l'au moins un deuxième élément d'identification (6) font partie intégrante de l'article (1), où l'au moins un premier élément d'identification (3) est déterminé par au moins une surface définie limitée ayant une structure de surface de diffraction définie, qui est reconnaissable par irradiation de lumière dans le domaine visible, et où l'au moins un deuxième élément d'identification (6) est prévu à l'intérieur d'un champ prédéterminé, où ledit champ prédéterminé contient au moins partiellement l'au moins une surface limitée définie du premier élément d'identification (3), où le procédé comprend l'étape de : l'enregistrement et le stockage de la position dans laquelle l'au moins un deuxième élément d'identification (6) est disposé par rapport à l'au moins un premier élément d'identification (3), dans une base de données, **caractérisé en ce que** le procédé comprend les étapes supplémentaires suivantes : l'enregistrement et le stockage d'informations d'identification, qui sont uniques pour l'au moins un deuxième élément d'identification (6), reproduction d'images au moyen d'un dispositif de formation d'image de la surface limitée définie par l'au moins un premier élément d'identification (3), l'extraction de la position de l'au moins un deuxième élément d'identification (6) à partir des données des positions de l'au moins un deuxième élément d'identification (6) stockées dans la base de données, la détection des informations par rapport au deuxième élément d'identification (6), où la position de l'au moins un deuxième élément d'identification (6) n'est pas visible pour l'oeil humain et où ladite position est déterminée par la position stockée dans la base de données, comparaison des informations par rapport à l'au moins un deuxième élément d'identification (6) avec les informations d'identification stockées dans la base de données, et l'indication du résultat de la comparaison des informations d'identification stockées et reproduites.

2. Procédé selon la revendication 1, dans lequel les informations d'identification de l'au moins un premier élément d'identification (6) sont stockées.

3. Procédé selon la revendication 1 ou 2, dans lequel les positions et les informations d'identification sont stockées dans une base de données externe.

4. Procédé selon l'une quelconque des revendications 1 à 3, dans lequel un dispositif de communication portable est utilisé avec un dispositif d'imagerie en tant que dispositif de reproduction d'images.

5. Procédé selon la revendication 3 et selon la revendication 4, dans lequel les données de la reproduction sont transmises par télécommunication par le dispositif de communication portable à la base de données externe.

6. Procédé selon l'une des revendications 4 ou 5, dans lequel le résultat de la comparaison est transmis au dispositif de communication portable.

7. Système consistant d'un objet (1) avec une caractéristique d'identification pour son identification, où la caractéristique d'identification comprend au moins un premier élément d'identification (3) et au moins un deuxième élément d'identification (6), où l'au moins un premier élément d'identification (3) est donné par au moins une surface définie limitée ayant une structure de surface de diffraction (4) définie, qui est reconnaissable par irradiation de lumière dans le domaine visible, et où l'au moins un deuxième élément d'identification (6) est prévu à l'intérieur d'un champ prédéterminé, qui contient au moins partiellement l'au moins une surface limitée définie du premier élément d'identification (3), dans lequel l'au moins un premier élément d'identification (3) et l'au moins un deuxième élément d'identification (6) présentent une partie intégrante de l'article (1), et une base de données, dans laquelle est arrangée de l'information concernant la position, à laquelle l'au moins un deuxième élément d'identification (6) est arrangé en relation à l'au moins un premier élément d'identification (3), **caractérisé en ce que** de l'information d'identification, qui est unique pour le deuxième élément d'identification (6) est stockée dans la base de données, où la position de l'au moins un deuxième élément d'identification (6) n'est pas visible pour l'oeil humain et est déterminé à l'aide de la position stockée dans la base de données.

8. Système selon la revendication 7, dans lequel l'au moins un deuxième élément d'identification (6) est donné par une structure aléatoire dans une surface de l'au moins un deuxième élément d'identification (6) ou de l'article (1).

9. Système selon la revendication 8, dans lequel la structure aléatoire de l'au moins un deuxième élément d'identification (6) est intégré dans la structure de surface de diffraction (4) définie de l'au moins un premier élément d'identification (3).

10. Système selon la revendication 9, dans lequel la structure de surface de diffraction (4) définie et la structure aléatoire sont formées sur une surface en plastique.

11. Système selon la revendication 10, dans lequel la surface en plastique est formée par des polymères amorphes ou cristallins, ou un mélange de polymères.

12. Système selon la revendication 9 ou 10, dans lequel la structure de surface de diffraction (4) définie et la structure aléatoire sont formées sur une surface métallique.

13. Système selon l'une quelconque des revendications 7 à 12, dans lequel l'au moins un deuxième élément d'identification (6) n'est pas visible.

14. Système selon l'une quelconque des revendications 7 à 13, dans lequel la structure de surface de diffraction (4) définie génère un effet d'interférence holographique ou un hologramme.

15. Système selon l'une quelconque des revendications 7 à 14, dans lequel le champ prédéterminé de l'au moins un deuxième élément d'identification (6) est un champ optique de détection.
